# EUROPEAN PATENT SPECIFICATION

(11) **EP 0 490 253 B1**
(45) Date of publication and mention of the grant of the patent: **06.03.1996**
(21) Application number: 91120833.8
(22) Date of filing: 04.12.1991
(51) Int. Cl.: G03G 9/09, C08K 5/23, C09B 35/21

(54) **Magenta toner for developing electrostatic images**
Magenta-Toner für die Entwicklung elektrostatischer Bilder
Toner magenta, pour le développement d'images électrostatiques

(30) Priority: 14.12.1990 JP 410888/90; 28.12.1990 JP 417261/90
(43) Date of publication of application: 17.06.1992
(60) Divisional application: 94106889.2
(73) Proprietor: ORIENT CHEMICAL INDUSTRIES, LTD., Osaka-shi (JP)
(72) Inventor: Otsuka, Masahiro, c/o Orient Chemical Ind. Ltd.Lab, Sanra, Neyagawa-shi, Osaka (JP)
(74) Representative: Liedl, Christine, Dipl.-Chem.

(56) References cited:
- DE-A- 3 220 772
- GB-A- 2 071 677
- PATENT ABSTRACTS OF JAPAN vol. 11, no. 378 (P-645)(2825) 10 December 1987 & JP-A-62 147 465
- DATABASE WPIL Week 1081, Derwent Publications Ltd., London, GB; AN 81-16208D (10) & JP-A-55 166 654
- PATENT ABSTRACTS OF JAPAN vol. 12, no. 48 (P-666)(2895) 13 February 1988 & JP-A-62 196 671
- PATENT ABSTRACTS OF JAPAN vol. 6, no. 174 (C-123)8 September 1982 & JP-A-57 090 041
- PATENT ABSTRACTS OF JAPAN vol. 4, no. 186 (C-36)20 December 1980 & JP-A-55 127 175
- PATENT ABSTRACTS OF JAPAN vol. 11, no. 69 (C-407)3 March 1987 & JP-A-61 228 044
- PATENT ABSTRACTS OF JAPAN vol. 14, no. 558 (P-1141)12 December 1990 & JP-A-02 238 439
- PATENT ABSTRACTS OF JAPAN vol. 12, no. 225 (E-626)25 June 1988 & JP-A-63 017 565
- DATABASE WPIL Week 3188, Derwent Publications Ltd., London, GB; AN 88-217657 [31] & JP-A-63 155 004

## Description

The present invention relates to a magenta toner powder for developing electrostatic images used for electrophotography, electrostatic recording, electrostatic printing and other purposes, with a red dis-azo dye having the triphenylmethane structure.

In recent years, there have been increasing demands for color toners which offer images of various desired colors as necessary with the diversification of purpose of use of copying machines and printing machines, etc. So-called three primary color toners, which offer yellow, magenta and cyan colors, respectively, are important in obtaining full-color images.

This kind of color toners basically comprise a toner resin and a coloring agent. To improve toner chargeability, a light-colored or colorless charge control agent providing a positive or negative charge is often added. When this toner is used as a two-component developing agent, the electrostatic latent image formed on a photoreceptor by charging and the exposure is made visible by developing it with the toner charged together mixing with a carrier and transferring the resulting toner image onto transfer paper or another transferee.

To obtain a full-color image by superposing toner images of yellow, magenta and cyan colors, the three subtractive primaries, using such toners for color electrophotography etc., each toner is required to have a good spectral property and transparency for color reproduction. Transparency is also required in toners used for color electrophotography for overhead projectors (hereinafter referred to as OHP). It should also be noted that these toners are required not to be prone to discoloration, fading or bleeding due to light or heat.

Organic pigments are generally most often used as coloring agents for color toners. However, most organic pigments are unsuitable for imparting a color to toners to yield color toners which are required to be transparent in superposing development because they are incompatible with binder resin.

A number of means have been proposed to meet such requirements as far as possible. For example, Japanese Patent Unexamined Publication No. 295069/1987 discloses color toners incorporating various oil-soluble dyes or dispersion dyes; Japanese Patent Unexamined Publication No. 15555/1987 discloses a magenta toner incorporating a Rhodamine dye; Japanese Patent Unexamined Publication No. 217465/1989 discloses a magenta toner incorporating an anthraquinone dispersion dye.

However, color toners incorporating an oil-soluble dye or dispersion dye which is soluble in resin can cause copied image quality deterioration during long term repeated use, thus posing a problem to be solved.

DE 32 20 772 A1 relates to a photoreceptor for electrophotography. The electro photographic photoreceptor incorporates a disazo pigment suitable for use as a charge generation material for the light-sensitive layer. A disazo pigment having triphenylmethane structure is shown as a photoreceptor, i.e. OPC (organic photoconductor), used for example in photosensitive drums in copying machines.

It is an object of the present invention to provide a magenta toner for developing electrostatic images which is good in transparency, color fastness to light, heat resistance, bleeding resistance and spectral property and which offers good color reproduction as a toner for full-color images.

As a means for accomplishing the object described above, the magenta toner for developing electrostatic images of the present invention comprises a resin and at least one kind of the dis-azo dye represented by the following formula [I]: 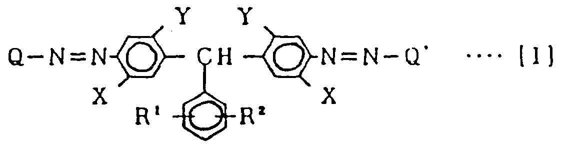 wherein X represents methyl group, ethyl group or alkoxy group having 1 to 4 carbon atoms; Y represents hydrogen atom or methyl group; R¹ and R independently represent hydrogen atom, alkyl group, alkoxy group or halogen atom; Q and Q' represent naphthol AS residue.

This magenta toner for developing electrostatic images is good in transparency, color fastness to light, heat resistance, bleeding resistance and spectral property, offers good color reproduction as a toner for full-color images and yield good copied images even in long term repeated use.

Also, the magenta toner for developing electrostatic images incorporates at least one kind of the dis-azo dye represented by Formula [I] above, a binder resin and a charge control agent, wherein said binder resin and charge control agent are substantially colorless.

Incorporating the substantially colorless binder resin and charge control agent, this magenta toner for developing electrostatic images is not prone to cause tone degradation in toner images and is capable of offering a uniform and stable triboelectrical chargeability even when it is used continuously or under changing conditions.

The magenta toner for developing electrostatic images of the present invention may also comprise a composition obtained by polymerizing a polymerizable composition containing a polymerizable monomer and at least one kind of the dis-azo dye represented by Formula [I] in the presence of a polymerization initiator.

This toner has still better transparency and permits better color reproduction as a toner for full-color images.

Figure 1 shows the near ultraviolet-visible light absorption spectrum of Example Dye 1.

Figure 2 shows the near ultraviolet-visible light absorption spectrum of Example Dye 3.

Figure 3 shows the near ultraviolet-visible light absorption spectrum of Example Dye 9.

Figure 4 shows the near ultraviolet-visible light absorption spectrum of Example Dye 10.

The dye represented by Formula [I] for the present invention can be synthesized as follows:

First, an aniline (A) 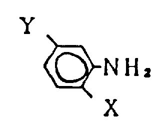 and a benzaldehyde (B) 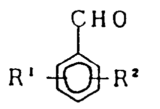 are condensed to a compound (C), 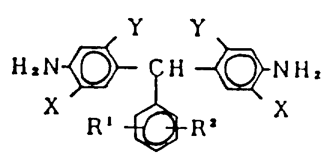 which is then tetrazotized and coupled with a naphthol AS to yield the dye represented by Formula [I].

With respect to the above formulas (A), (B) and (C), X, Y, R¹ and R have the same definitions as in Formula [I].

X represents methyl group, ethyl group or an alkoxy group having 1 to 4 carbon atoms such as methoxy, ethoxy, propoxy or butoxy; Y represents hydrogen atom or methyl group; R¹ and R independently represent hydrogen atom, alkyl group such as methyl, ethyl, propyl, iso-propyl, butyl, iso-butyl, sec-butyl, tert-butyl, amyl or iso-amyl, alkoxy group such as methoxy, ethoxy, propoxy or butoxy or atom of halogen such as chlorine, bromine or iodine.

With respect to Formula [I], Q and Q' are naphthol AS residues represented by the following formulas ① through ④, and Q and Q' may be identical or not.

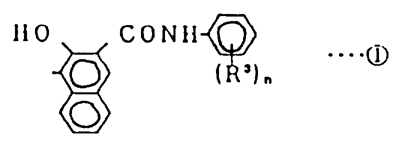

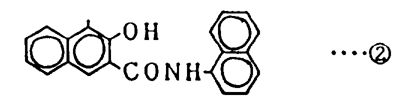

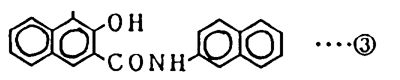

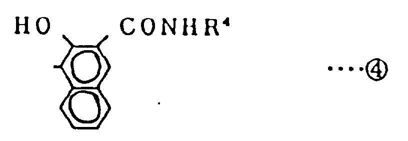

With respect to Formula ①, n represents an integer of 0 to 3; (R³)ₙ represents no substituent or one, two or three substituent(s); each R³ substituent independently represent alkyl group such as methyl, ethyl, propyl, iso-propyl, butyl, iso-butyl, sec-butyl, tert-butyl, amyl or iso-amyl, alkoxy group such as methoxy, ethoxy, propoxy or butoxy, atom of halogen such as chlorine, bromine or iodine or a nitro group.

With respect to Formula ④, R⁴ represents alkyl group such as methyl, ethyl, propyl, iso-propyl, butyl, iso-butyl, sec-butyl, tert-butyl, amyl or iso-amyl or hydroxyalkyl group such as hydroxymethyl, α-hydroxyetlhyl, β-hydroxyethyl, hydroxypropyl, hydroxybutyl or hydroxyamyl.

Naphthol AS compounds are exemplified by the following compounds (a) through (k), all of which are commercially available.
(a) Naphthol AS 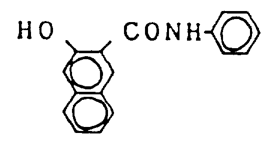
(b) Naphthol AS-D 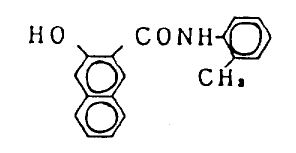
(c) Naphthol AS-RL 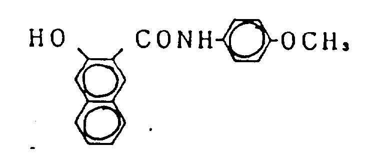
(d) Naphthol AS-OL 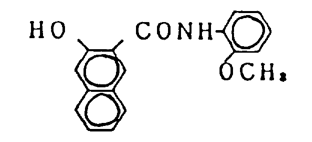
(e) Naphthol AS-PH 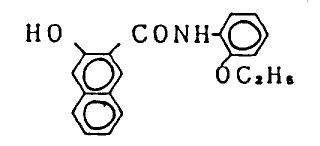
(f) Naphthol AS-E 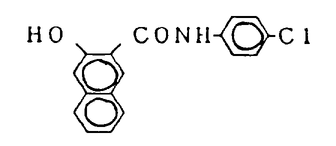
(g) Naphthol AS-TR 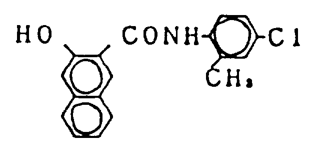
(h) Naphthol AS-BO 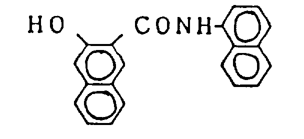
(i) Naphthol AS-SW 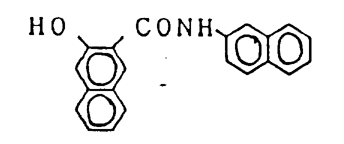
(j) Naphthol AS-BS 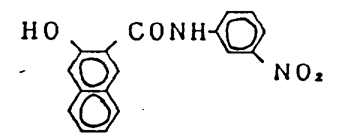
(k) Naphthol BD-1

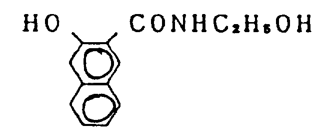

Examples of the dye represented by Formula [I] for the present invention are given in Table 1.

**Table 1**

| Example Dye Number | Aniline component | | Benzaldehyde component | | Coupler component | | λ max (nm) |
|---|---|---|---|---|---|---|---|
| | X | Y | R¹ | R | Q | Q' | |
| 1 | CH₃ | CH₃ | H | H | b | b | 522 |
| | | | | | | | 558 |
| 2 | CH₃ | CH₃ | H | H | c | c | 522 |
| | | | | | | | 556 |
| 3 | CH₃ | CH₃ | H | H | e | e | 520 |
| | | | | | | | 554 |
| 4 | CH₃ | CH₃ | H | H | a | a | 522 |
| | | | | | | | 556 |
| 5 | CH₃ | H | H | H | a | a | 516 |
| | | | | | | | 548 |
| 6 | OCH₃ | H | H | H | a | a | 530 |
| | | | | | | | 560 |
| 7 | CH₃ | H | CH₃ (para) | CH₃ (ortho) | b | b | 520 |
| | | | | | | | 540 |
| 8 | OCH₃ | H | C₂H₅ (para) | H | c | c | 526 |
| | | | | | | | 556 |
| 9 | CH₃ | H | i-C₄H₉(para) | H | h | h | 520 |
| | | | | | | | 556 |
| 10 | CH₃ | CH₃ | OCH₃ (para) | H | c | c | 522 |
| | | | | | | | 556 |
| 11 | CH₃ | CH₃ | i-C₄H₉ (para) | H | f | f | 524 |
| | | | | | | | 558 |
| 12 | CH₃ | H | C₂H₅ (para) | H | g | g | 516 |
| | | | | | | | 552 |
| 13 | CH₃ | H | H | C1 (ortho) | f | f | 520 |
| | | | | | | | 552 |
| 14 | CH₃ | CH₃ | H | H | a | b | 522 |
| | | | | | | | 558 |
| 15 | OCH₃ | H | OCH₃ (para) | H | c | c | 528 |
| | | | | | | | 560 |
| 16 | CH₃ | CH₃ | H | H | j | j | 526 |
| | | | | | | | 562 |
| 17 | CH₃ | CH₃ | H | H | k | k | 512 |
| | | | | | | | 544 |

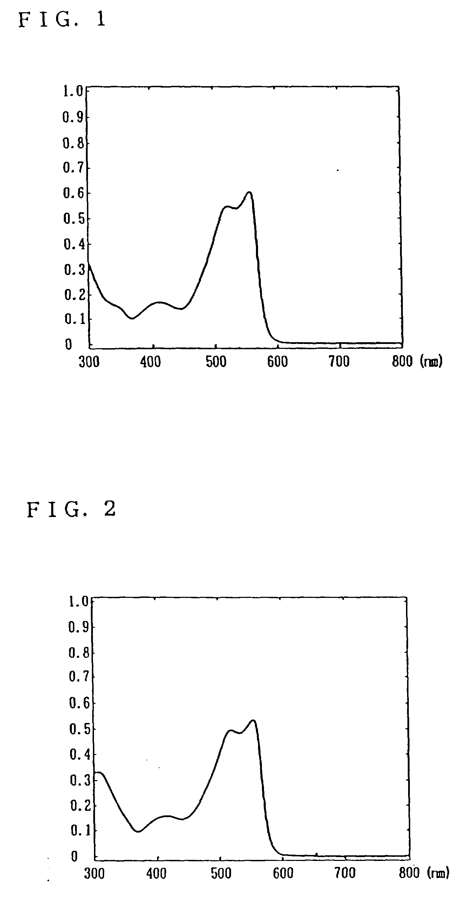

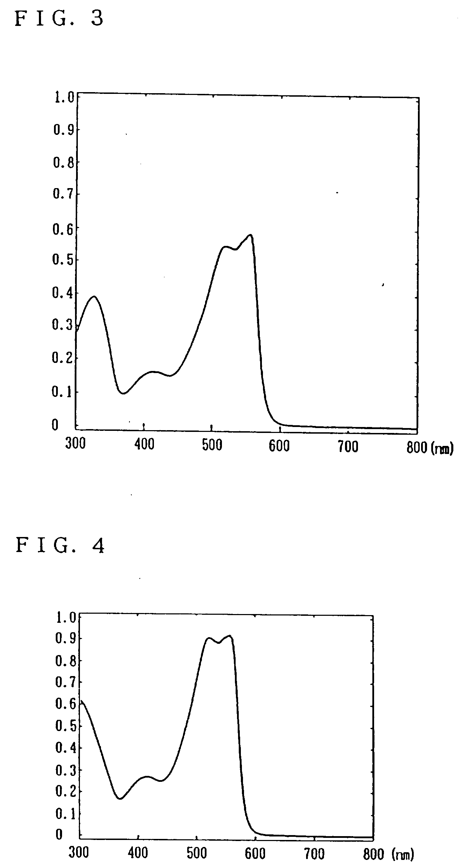

In Table 1, λ max shows the maximum value of visible light absorption wavelength of each example dye determined in chloroform solvent using the 8451A Diode Array Spectrophotometer (trade name, produced by Hewlett-Packard). The near ultraviolet-visible absorption spectra of Example Dyes 1, 3, 9 and 10 determined in the same manner as above are shown in Figures 1, 2, 3 and 4, respectively. In Figures 1 through 4, the abscissa indicates wavelength and the ordinate indicates absorbance.

The magenta toner for developing electrostatic images of the present invention can incorporate almost any conventional toner resin or binder resin. The toner resin or binder resin which is preferably used for the present invention is required to be transparent, substantially colorless (colored to such extent that toner images do not undergo tone deterioration), capable of dissolving or melt-mixing the dis-azo dye represented by Formula [I] for the present invention and positively or negatively chargeable per se or by the addition of a charge control agent, to become fluid under appropriate heat or pressure conditions and to be finely pulverizable.

Examples of such resins which can be preferably used include polystyrene resin, acryl and acrylic resins, styrene-(meth)acrylate copolymer, styrene-methacrylate copolymer and polyester resin. Other usable resins include epoxy resin, polyamide resin, polyvinylal resin, polyethylene resin, polypropylene resin and polyolefin. These resins may be used singly or in combination of two or more kinds.

The magenta toner for developing electrostatic images of the present invention may contain a positively or negatively charging charge control agent to improve its chargeability. The charge control agent is preferably substantially colorless. Here, "substantially colorless" means that the color is such that toner images do not undergo tone deterioration.

Charge control agents which can be preferably used for negatively chargeable toners to provide a negative charge are metal complexes of aromatic o-oxycarboxylic acid, metal complexes of aromatic o-aminocarboxylic acid and metal complexes of aromatic dicarboxylic acid. Examples of such metal complexes include the metal complexes of salicylic acid or alkyl salicylic acid disclosed in Japanese Patent Examined Publication No. 42752/1980 (e.g., chromium complex of 3,5-di-tertiary-butylsalicylic acid, chromium complex of salicylic acid), the zinc complexes of aromatic o-oxycarboxylic acid disclosed in Japanese Patent Unexamined Publication No. 69073/1986 (e.g., zinc complex of 3,5-di-tertiary-butylsalicylic acid, zinc complex of oxynaphthoic acid), the aluminum complexes of aromatico-oxycarboxylic acid and aluminum complexes of aromatic o-aminocarboxylic acid disclosed in Japanese Patent Unexamined Publication Nos. 208865/1988 and 105262/1989, and the chromium or zinc complexes of aromatic dicarboxylic aciddisclosed in Japanese Patent Unexamined Publication No. 73963/1986.

Positively charging charge control agents which can be preferably used for positively chargeable toners are quaternary ammonium salt compounds and polyamine compounds. Examples of such charge control agents include the quaternary ammonium salt compounds disclosed in US Patent No. 4,654,175 and Japanese Patent Examined Publication No. 54694/1989 and the polyamine resin disclosed in Japanese Patent Examined Publication No. 13284/1978. This kind of charge control agents are commercially available under trade names of Bontron E-81, Bontron E-84, Bontron E-88, Bontron P-51 and Bontron P-52 (trade names, produced by Orient Chemical Industries Ltd.).

Examples of polymerizable monomers used in the magenta toner for developing electrostatic images described above include vinyl aromatic monomers such as styrene and methylstyrene, acrylic monomers such as methyl acrylate, ethyl acrylate, phenyl acrylate, methyl methacrylate, butyl methacrylate, 2-ethylhexyl methacrylate and ethyl -hydroxyacrylate, vinyl esters such as vinyl acetate and vinyl propionate, vinyl ethers such as vinyl-n-butyl ether and vinylphenyl ether and unsaturated monoolefins such as ethylene and propylene.

Examples of polymerization initiators which can be used for this magenta toner for developing electrostatic images include azo type initiators such as
2,2'-azobisisobutyronitrile,
2,2'-azobis-2-methylbutyronitrile and
2-t-butylazo-2-cyanopropane and peroxide type initiators such as t-butyl hydroperoxide, di-t-butyl peroxide and benzoyl peroxide.

Although any method of polymerization can be used to polymerize the polymerizable composition described above, solution polymerization, suspension polymerization, mass polymerization, etc. are practically useful.

The toner of the present invention preferably contains the dis-azo dye represented by Formula [I] in an amount of 0.5 to 10 parts by weight, more preferably 1 to 5 parts by weight per 100 parts by weight of resin or binder resin.

The content of the dis-azo dye represented by Formula [I] in the polymerizable composition described above is preferably 10 to 20% by weight.

With respect to the toner of the present invention when it comprises a composition obtained by polymerizing this polymerizable composition, the content of the polymeric composition is preferably 2 to 50 parts by weight, more preferably 5 to 20 parts by weight per 100 parts by weight of resin or binder resin.

The toner of the present invention may incorporate one or more other coloring agents, as long as the purpose or effect thereof is not interfered with.

The amount of charge control agent is preferably 0.1 to 10 parts by weight, more preferably 0.5 to 5 parts by weight per 100 parts by weight of toner resin or binder resin.

To improve toner quality, it is preferable to internally or externally add one or more additives other than the charge control agent, such as a fluidity improving agent and image peeling preventing agent.

The magenta toner for developing electrostatic images of the present invention is, for example, produced as follows:

A toner of 5 to 20 µm in average particle size can be obtained by thoroughly mixing the dis-azo dye represented by Formula [I] or the above-mentioned polymeric compositioIn containing the dye, a resin or binder resin, a chrarge control agent and, if necessary, a magnetic material, a fluidizing agent and other additives using a ball mill or another mechanical mixer, subsequently kneading the mixture in a molten state using a hot kneader such as a heat roll, kneader or extruder, cooling and solidifying the mixture, and then pulverizing the mixture and classifying the particles.

Other usable methods include the method in which the starting material is dispersed in binder resin solution and then spray dried, and the polymerizing toner production method in which a given set of materials are mixed in a monomer for binder resin to yield an emulsified suspension which is then polymerized to yield the desired toner (e.g., the methods described in Japanese Patent Unexamined Publication Nos. 260461/1989 and 32365/1990.

When using the toner of the present invention as a two-component developer, development can be achieved by the two-component magnetic brush developing process and other processes using the toner in mixture with carrier powder.

Any known carrier can be used. Examples of the carrier include iron powder, nickel powder, ferrite powder arid glass beads of about 50 to 200 µm in particle size, and such materials as coated with acrylate copolymer, styrene-acrylate copolymer, styrene-methacrylate copolymer, silicone resin, polyamide resin, ethylene fluoride resin or the like.

When using the toner of the present invention as a single-component developer, a small amount of finely divided magnetic powder of ferromagnetic material such as iron powder, nickel powder or ferrite powder may be added and dispersed upon preparing the toner as described above. Examples of developing processes which can be used in this case include contact development and jumping development.

### Examples

The present invention is hereinafter described in more detail by means of the following examples, but these are not to be construed as limitative on the present invention. In the description below, "part(s) by weight" are referred to as "part(s)" for short.

### Examples of synthesis of dis-azo dye for the present invention

### Synthesis of 4,4'-benzylidene-di-2,5-xylidine

A mixture of 121 g (1 mol) of 2,5-xylidine, 53 g (0.5 mol) of benzaldehyde, 70 g of concentrate hydrochloric acid and 150 g of chlorobenzene was reacted while refluxing for 7 hours.

After being alkalized in an aqueous solution of caustic soda, the reaction mixture was subjected to steam distillation, followed by residue filtration. The solid separated by filtration was washed with water and dried to yield 130 g of an unpurified base compound.

This compound was purified with an about 3-fold amount of alcohol to yield a white powder represented by the following structural formula. Its melting point was 203 to 205 °C.

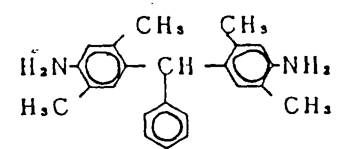

### Synthesis of Example Dye 1

8.3 g of 4,4'-benzylidene-di-2,5-xylidine was dissolved and dispersed in 80 g of water containing 12 g of concentrate hydrochloric acid. After cooling the solution to under 5 °C, a solution of 7 g of sodium nitrite in a small amount of water was dropwise added thereto for tetrazotization.

Separately, 13.6 g of naphthol AS-D was dissolved in 200 g of water containing 4.5 g of caustic soda. To this solution, 1 g of a nonionic dispersing agent was added, followed by addition of ice to cool the mixture to under 5 °C to yield a coupler solution.

To this coupler solution, the tetrazonium salt solution prepared above was dropwise added for coupling. The resulting crystal was separated by filtration, washed with water and dried to yield 22.5 g of a red powder of dye (Example Dye 1).

### Synthesis of Example Dye 11

9.7 g of 4,4'-(p-isobutylbenzylidene)-di-2,5-xylidine was dissolved in 100 g of acetic acid. To this solution, 10 g of concentrate hydrochloric acid was added. After cooling the solution to under 5 °C, a solution of 3.5 g of sodium nitrite in a small amount of water was dropwise added thereto for tetrazotization.

14.9 g of naphthol AS-E was dissolved in 100 g of DMF. To this solution, 2 g of a nonionic surfactant was added, followed by cooling to under 10 °C to yield a coupler solution.

While keeping the coupler solution alkaline by dropwise addition of a dilute aqueous solution of caustic soda, the tetrazonium salt solution prepared above was dropwise added thereto for coupling.

The resulting crystal was separated by filtration, washed with water and dried to yield 25 g of a red powder of dye (Example Dye 11).

### Examples of preparation of polymeric composition

### Preparation of Polymeric Composition 1

140 parts of styrene, 60 parts of n-butyl methacrylate, 50 parts of hydroxyethyl methacrylate, 30 parts of Example Dye 1 and 300 parts of toluene were placed in a three-necked flask equipped with a reflex condenser, and 2 parts of azoisobutyronitrile was added, followed by polymerization at 85 to 100 °C for 10 hours. After completion of the reaction , the unreacted monomer and toluene were removed to yield Polymeric Composition 1.

### Preparation of Polymeric Composition 2

100 parts of styrene, 100 parts of n-butyl methacrylate, 50 parts of hydroxyethyl methacrylate, 50 parts of Example Dye 2 and 300 parts of toluene were placed in a three-necked flask equipped with a reflex condenser, and 5 parts of azoisobutyronitrile was added, followed by polymerization at 75 to 90 °C for 10 hours. After completion of the reaction, the unreacted monomer and toluene were removed to yield Polymeric Composition 2.

### Preparation of Polymeric Compositions 3 through 17

Polymeric Compositions 3 through 17 were prepared in the same manner as in above Examples except that the dyes were replaced with Example Dyes 3 through 17 listed in Table 1 and the type and amount of polymerization initiator were varied as appropriate.

### Example 1

Styrene-acryl copolymer [HIMER TB-1000 (trade name), produced by Sanyo Kasei Co., Ltd.].... 100 parts
Example Dye 1.... 3 parts
Charge control agent [Bontron E-84 (trade name), produced by Orient Chemical Industries Ltd.].... 1.5 parts
Low polymer propylene [Biscal 550-P (trade name), produced by Sanyo Kasei Co., Ltd.].... 10 parts

The above ingredients were uniformly pre-mixed using a high-speed mixer, and then kneaded in a molten state using an extruder, cooled, and roughly milled in a vibration mill. The obtained coarse product was finely pulverized using an air jet mill equipped with a classifier to obtain a fine powder of toner of 5 to 20 µm in particle size.

5 parts of this toner was admixed with 95 parts of a resin-coated iron powder carrier [F813-150 (trade name), produced by Nippon Teppun Co., Ltd.) to yield a developer.

This developer was found to be -20.2 µ C/g in the amount of initial blowoff charges. The amounts of initial blowoff charges of this developer under low-temperature low-humidity conditions (5°C, 30% relative humidity) and high-temperature high-humidity conditions (35 °C, 90% relative humidity) were -20.3 µ C/g and -20.5 µ C/g, respectively, indicating very high stability.

When this developer was used for a commercial copying machine (selenium drum type) to form toner images, fog-free very distinct glossy magenta color images were obtained. Even long term repeated use permitted the obtainment of stable copies free of quality degradation.

### Example 2

Polyester [HP-301, produced by The Nippon Synthetic Chemical Industry, Co., Ltd.].... 100 parts
Example Dye 6.... 3 parts
Charge control agent [Bontron E-81 (trade name), produced by Orient Chemical Industries Ltd.].... 1.2 parts
Low polymer propylene [Biscal 550-P (trade name), produced by Sanyo Kasei Co., Ltd.].... 10 parts

The above ingredients were treated in the same manner as in Example 1 to yield a toner. Three parts of the obtained toner was admixed with 97 parts of an iron powder carrier [TEFV200/300 (trade name), produced by Nippon Teppun Co., Ltd.] to yield a developer. This developer was found to be -22.4 µ C/g in the amount of initial blowoff charges.

When copies were taken in the same manner as in Example 1, this developer gave fog-free distinct magenta images with high thin-line reproducibility. Even long term repeated use permitted the obtainment of stable copies free of image quality degradation.

### Example 3

Styrene-acryl copolymer [HIMER TB-1000 (trade name), produced by Sanyo Kasei Co., Ltd.].... 100 parts
Polymeric Composition 1.... 15 parts
Charge control agent [Bontron E-88 (trade name), produced by Orient Chemical Industries Ltd.].... 1 part
Low polymer propylene [Biscal 550-P (trade name), produced by Sanyo Kasei Co., Ltd.].... 10 parts

The above ingredients were treated in the same manner as in Example 1 to yield a toner. Three parts of the obtained toner was admixed with 97 parts of an iron powder carrier [TEFV200/300 (trade name), produced by Nippon Teppun Co., Ltd.] to yield a developer. This developer was found to be -20.2 µ C/g in the amount of initial blowoff charges.

When the developer was used for a commercial color copying machine [produced by Canon Inc.] to take copies, fog-free very distinct magenta images were obtained. Even long term repeated use permitted the obtainment of stable copies free of image quality degradation.

When images were formed using this developer on images formed using a yellow toner developer and images were formed thereon using a cyan toner developer, color images with good color reproduction were obtained.

### Example 4

Styrene-acryl copolymer [HIMER TB-1000 (trade name), produced by Sanyo Kasei Co., Ltd.].... 100 parts
Example Dye 11.... 2.5 parts
Charge control agent [Bontron P-51 (trade name), produced by Orient Chemical Industries Ltd.].... 1.2 parts
Low polymer propylene [Biscal 550-P (trade name), produced by Sanyo Kasei Co., Ltd.].... 10 parts

The above ingredients were treated in the same manner as in Example 1 to yield a toner. Three parts of the obtained toner was admixed with 97 parts of an iron powder carrier [TEFV200/300 (trade name), produced by Nippon Teppun Co., Ltd.] to yield a developer. This developer was found to be +22.8 µ C/g in the amount of initial blowoff charges.

When the developer was used for a commercial copying machine [Canon NP (trade name), produced by Canon Inc.] to take copies, fog-free very distinct magenta images were obtained. Even long term repeated use permitted the obtainment of stable copies free of image quality degradation.

When copied images on an OHP sheet were projected on a screen using an OHP, images with distinct magenta color were obtained.

### Example 5

Styrene-acryl copolymer [HIMER TB-1000 (trade name), produced by Sanyo Kasei Co., Ltd.].... 100 parts
Example Dye 9.... 5 parts
Iron sesquioxide (Fe₂O₃).... 15 parts Charge control agent [Bontron P-51 (trade name), produced by Orient Chemical Industries Ltd.].... 1 part
Low polymer propylene [Biscal 550-P (trade name), produced by Sanyo Kasei Co., Ltd.].... 10 parts

The above ingredients were uniformly pre-mixed using a ball mill to yield a premix, which was then kneaded in a molten state using a twin-screw extruder [PCM-30 (trade name), produced by Ikegai Seisakusho Co., Ltd.], cooled and thereafter roughly crushed, finely pulverized and classified to yield a single-component toner of 5 to 15 µm in particle size.

When this toner was used for a commercial copying machine [NP-201 (trade name), produced by Canon Inc.] to form toner images, fog-free magenta images were obtained with high quality.

### Comparative Example 1

A toner was prepared and used to form copied images in the same manner as in Example 1 except that the dis-azo dye used in Example 1 (Example Dye 1) was replaced with C. I. Solvent Red 22 (C.I. 21250). The initially obtained copied images had a distinct red color, but repeated copying for a long period resulted in uneven copying with color density degradation and fogging.

### Comparative Example 2

A toner was prepared and used to form copied images in the same manner as in Example 1 except that the dis-azo dye used in Example 1 (Example Dye 1) was replaced with C. I. Pigment Red 61 (C.I. 24830:1). The initially obtained copied images had a distinct red color, but the image density was lower than that obtained in Example 1 and repeated copying for a long period resulted in uneven copying with color density degradation. Also, the images copied on an OHP sheet lacked transparency and were not suitable for use for OHP.

## Claims

1. A magenta toner powder for developing electrostatic images which comprises a resin and at least one kind of the dis-azo dye represented by the following formula [I]: 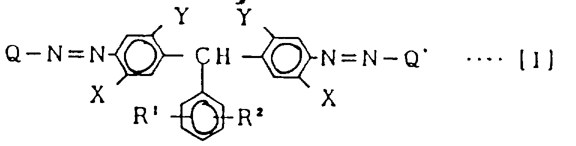 wherein X represents a methyl group, ethyl group or alkoxy group having 1 to 4 carbon atoms; Y represents a hydrogen atom or methyl group; R¹ and R independently represent a hydrogen atom, alkyl group, alkoxy group or halogen atom; Q and Q' represent a naphthol AS residue represented by the following formulas ① through ④ , and Q and Q' may be identical or not: 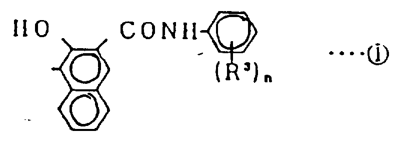 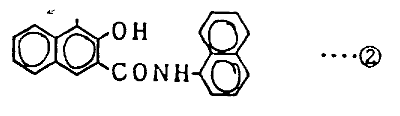 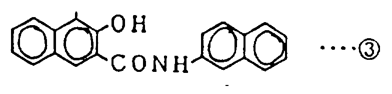 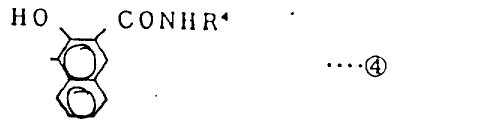
where n = 0-3
R³ = alkyl, alkoxy, halogen or nitro
R⁴ = alkyl or hydroxyalkyl

2. The magenta toner powder for developing electrocstatic images of claim 1 further comprising a charge control agent, wherein said binder resin and charge control agent are substantially colorless.

3. The magenta toner powder for developing electrostatic images of claim 2 wherein said charge control agent is negatively charging charge control agent selected from the group consisting of metal complexes of aromatic o-oxycarboxylic acid, metal complexes of aromatic o-aminocarboxylic acid and metal complexes of aromatic dicarboxylic acid.

4. The magenta toner powder for developing electrostatic images of claim 2 wherein said charge control agent is a positively charging charge control agent selected from the group consisting of quaternary ammonium salt compounds and polyamine compounds.

5. The magenta toner powder for developing electrostatic images of one of claims 1 to 4 further comprising a polymeric composition of at least one kind of said dis azo dye represented by formula (I) and a polymer.

## Patentansprüche

1. Magenta-Toner-Pulver für die Entwicklung elektrostatischer Bilder, der ein Harz und mindestens eine Art des durch die folgende Formel [I] dargestellten Disazofarbstoffs enthält: 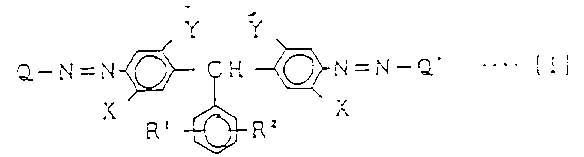 wobei X eine Methylgruppe, Ethylgruppe oder Alkoxygruppe mit 1 bis 4 Kohlenstoffatomen darstellt; Y ein Wasserstoffatom oder eine Methylgruppe darstellt; R¹ und R unabhängig voneinander ein Wasserstoffatom, eine Alkylgruppe, eine Alkoxygruppe oder ein Halogenatom darstellen; Q und Q' einen Naphthol-AS-Rest darstellen, der durch die folgenden Formeln 1 bis 4 dargestellt wird, und Q und Q' identisch sein können oder nicht: 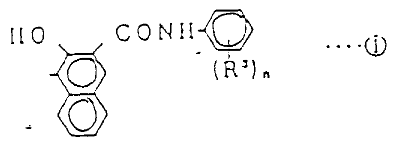 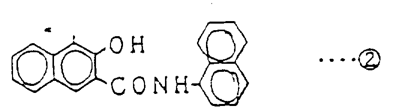 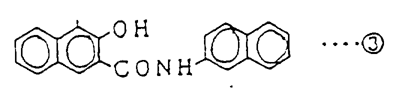 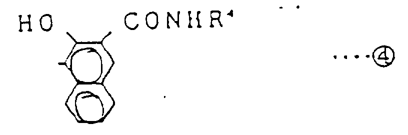
wobei n = 0-3
R³ = Alkyl, Alkoxy, Halogen oder Nitro
R⁴ = Alkyl oder Hydroxyalkyl.

2. Magenta-Toner-Pulver für die Entwicklung elektrostatischer Bilder nach Anspruch 1, weiterhin enthaltend ein Ladungssteuermittel, wobei das Binderharz und das Ladungssteuermittel im wesentlichen farblos sind.

3. Magenta-Toner-Pulver für die Entwicklung elektrostatischer Bilder nach Anspruch 2, wobei das Ladungssteuermittel ein negativ ladendes Ladungssteuermittel ist, ausgewählt aus der Gruppe bestehend aus Metallkomplexen von aromatischen o-Oxycarbonsäuren, Metallkomplexen von aromatischen o-Aminocarbonsäuren und Metallkomplexen von aromatischen Dicarbonsäuren.

4. Magenta-Toner-Pulver für die Entwicklung elektrostatischer Bilder nach Anspruch 2, wobei das Ladungssteuermittel ein positiv ladendes Ladungssteuermittel ist, ausgewählt aus der Gruppe bestehend aus quaternären Ammoniumsalzverbindungen und Polyaminverbindungen.

5. Magenta-Toner-Pulver für die Entwicklung elektrostatischer Bilder nach einem der Ansprüche 1 bis 4, weiterhin enthaltend eine polymerische Zusammensetzung von mindestens einer Art des Disazofarbstoffs dargestellt durch [I] und ein Polymer.

## Revendications

1. Toner magenta en poudre destiné au développement d'images électrostatiques, qui comporte une résine et au moins un type de colorant disazoïque représenté par la formule suivante (I) : 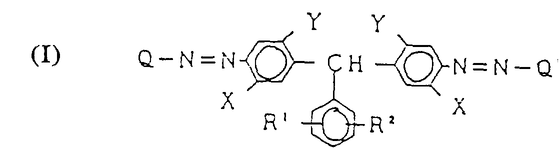 dans laquelle X représente un groupe méthyle, éthyle ou alcoxy comportant de 1 à 4 atomes de carbone, Y représente un atome d'hydrogène ou un groupe méthyle, R¹ et R représentent chacun, indépendamment, un atome d'hydrogène ou d'halogène ou un groupe alkyle ou alcoxy, et Q et Q', qui peuvent être identiques ou non, représentent chacun l'un des résidus de naphtol AS représentés par les formules suivantes (1) à (4): 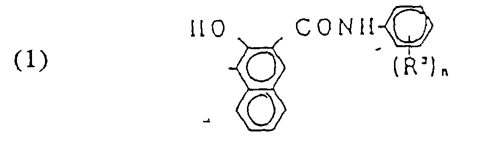 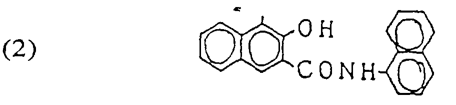 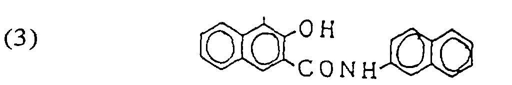 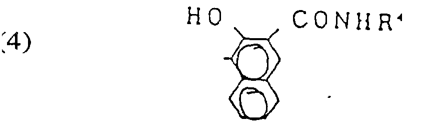 dans lesquelles n vaut de 0 à 3, R³ représente un atome d'halogène ou un groupe alkyle, alcoxy ou nitro, et R⁴ représente un groupe alkyle ou hydroxyalkyle.

2. Toner magenta en poudre destiné au développement d'images électrostatiques, conforme à la revendication 1, qui comporte en outre un agent de commande des charges et dans lequel ladite résine servant de liant et ledit agent de commande des charges sont pratiquement incolores.

3. Toner magenta en poudre destiné au développement d'images électrostatiques, conforme à la revendication 2, dans lequel ledit agent de commande des charges est un agent de commande des charges apportant des charges négatives, qui est choisi dans l'ensemble constitué par les complexes métalliques d'acides aromatiques orthohydroxycarboxyliques, les complexes métalliques d'acides aromatiques ortho-aminocarboxyliques, et les complexes métalliques d'acides aromatiques dicarboxyliques.

4. Toner magenta en poudre destiné au développement d'images électrostatiques, conforme à la revendication 2, dans lequel ledit agent de commande des charges est un agent de commande des charges apportant des charges positives, qui est choisi dans l'ensemble constitué par les composés de type sel d'ammonium quaternaire et les composés polyaminés.

5. Toner magenta en poudre destiné au développement d'images électrostatiques, conforme à l'une des revendications 1 à 4, qui comporte en outre une composition de polymère constituée d'un polymère et d'au moins un type de colorant disazoïque précité, représenté par la formule (I).
